# EUROPEAN PATENT APPLICATION

(11) **EP 3 996 012 A1**
(43) Date of publication of application: **11.05.2022**
(21) Application number: 20834963.9
(22) Date of filing: 02.07.2020
(51) Int. Cl.: G06Q 10/06, G06Q 50/02, A01G 7/00

(54) **PLANT CULTIVATION MANAGEMENT SYSTEM AND PLANT CULTIVATION MANAGEMENT DEVICE**

(30) Priority: 04.07.2019 JP 2019125524
(71) Applicant: OMRON Corporation, Shiokoji-dori, Shimogyo-ku, Kyoto-shi Kyoto 600-8530 (JP); Organic Nico Co., Ltd., Kyoto-shi, Kyoto 610-1132 (JP)
(72) Inventor: SASAKI, Sho, Kyoto-shi, Kyoto 600-8530 (JP); MIYAJI, Takaaki, Kyoto-shi, Kyoto 600-8530 (JP); NAKAMURA, Arata, Kyoto-shi, Kyoto 610-1132 (JP)
(74) Representative: Isarpatent
(86) International application number: PCT/JP2020/026053
(87) International publication number: WO 2021/002439

(57) **Abstract**

The technique includes: a plan determination device (3) that determines a cultivation plan of a plant; an environment/work controller (4) that controls an ambient environment of the plant and that gives a worker a work instruction; and a management execution device (2) that controls a relationship between a planned index value related to the cultivation plan and an actual index value of the cultivation of the plant. The management execution device gives achievement/prediction information on the index value and work content information to the plan determination device, obtains index value plan information from the plan determination device, gives change information on a work content and a control plan of the plant ambient environment to the environment/work controller, and obtains actual work content information, record information on the index value of the plant and plant ambient environment, and environment/biological body record information from the environment/work controller.

## Description

### TECHNICAL FIELD

The present invention relates to a plant cultivation management system that controls a growth situation of a plant to be cultivated and also relates to a plant cultivation management device.

### BACKGROUND ART

Producers for cultivating plants such as crops can obtain stable profits by controlling yields in accordance with cultivation plans reflecting their management policies. However, the yield of a plant depends on the ambient environment of the plant, the suitability of work devoted to the plant, and other factors. Thus, it is not always easy to control the growth situation so as to obtain the yield in accordance with the cultivation plan. To obtain a target yield, for example, the content of work devoted to a plant at a certain time depends on the ambient environment and growth situation of the plant. In addition, many kinds of work are conceivable. To select the optimum work from a plurality of kinds of work and perform this work to an appropriate degree, producers require abundant experiences. Furthermore, producers usually predict future yields based on their experiences. Thus, inexperienced producers have difficulty executing their cultivation plans as scheduled.

One known technique related to the above is a growth control method using a crop growth control device that helps control and predict a growth situation of a crop. A storage unit in this crop growth control device stores crop information, work plan information, evaluation value information, and field condition information. The crop information contains: a planting start date when the crop is planted; a planned harvest date when the crop is scheduled to be harvested; an actual harvest date when the crop is actually harvested; an actual yield that is a yield of a crop actually harvested; and a field condition that is an environment to which a field is subjected, during a cropping period, which is a period between a planting start date and an actual harvest dates, in association with a crop ID that uniquely identifies a plant of the crop. The work plan information contains: a work name that is a name of farm work; the amount of work that is the degree of the farm work scheduled to be performed; and a work date and time when the farm work is scheduled to be performed, in association with the crop ID. The evaluation value information contains: an evaluation value that is a value of an evaluation index which indicates an index for evaluating the growth situation of the crop; and a measurement date when the evaluation value is measured, in association with the crop ID. The field condition information contains an equation by which the field condition is calculated based on a weather condition and the work amount of the farm work, for each range of the weather condition and for each range of the work amount of the farm work. A control unit in the crop growth control device uses an evaluation value input unit to register the crop ID, the measurement date, and the evaluation value received via the input device, in the evaluation value information. The control unit uses an evaluation index setting unit to set the evaluation index received via the input device to a prediction evaluation index to be noticed upon prediction of the growth situation of the crop. The control unit uses a prediction information setting unit to set the evaluation index to a crop ID of a prediction target crop, which is a target to be predicted and a prediction period specified by the prediction start date and the prediction end date which are received via the input device to the prediction information. The control unit uses a similar crop extraction unit to, based on a search condition received via the input device, search the crop information to extract a similar crop, which is a crop whose evaluation index, actual information, and a field condition are in a range designated by the search condition. The control unit uses a successful crop extraction unit to, based on the search condition and the crop ID of the similar crop received via the input device, search the field information to extract a successful crop, which is a crop whose evaluation index and actual information satisfy criteria designated by the search condition. The control unit uses a controllable range calculation unit to calculate a range specified by the minimum and maximum of evaluation values of the predictive evaluation index of the successful crop, as a manageable range, which is a standard for determining whether the growth of the crop is a success. The control unit uses a prediction growth range creation unit to calculate a weather condition by generating an error for a numerical variable to/from which an error can be added or subtracted, based on a weather forecast in the forecast period which is acquired by weather information acquisition unit and an error distribution of the weather forecast received via the input device, calculate a field condition based on the calculated weather condition, the work plan information, and the above equation, and creates a result of predicting the evaluation value of the predicted evaluation index in the predicted period by using the predicted model from the calculated field conditions, as a predicted growth range. The control unit uses a predicted result display unit to cause an output device to output the controllable range and/or the predicted growth range as a prediction result (e.g., see Patent Document 1).

This technique can help appropriate work planning by providing a manageable range, which is a criterion for determining whether the growth of a crop is a success and a prediction growth range, which is a predicted value of the growth situation of the crop. Moreover, this technique creates the prediction growth range in consideration of how the fluctuation of weather conditions resulting from an error of a weather forecast affects the growth of a crop, thereby helping work planning more appropriately.

Conventional techniques, however, may fail to appropriately control the cultivation of a plant in accordance with a cultivation plan reflecting a management policy of a producer. Thus, it cannot be said that those techniques always control cultivation so as to obtain the yield in accordance with the management policy.

### PRIOR ART DOCUMENT

### PATENT DOCUMENT

Patent Document 1: Japanese Patent No. 5756374

### SUMMARY OF THE INVENTION

### PROBLEMS TO BE SOLVED BY THE INVENTION

The present invention, which has been made in view of the above problems, aims to provide a technique that enables even inexperienced producers to control cultivation in accordance with cultivation plans reflecting their management policies.

### MEANS FOR SOLVING THE PROBLEM

The present invention that accomplishes the above aim is a plant cultivation management system.

This plant cultivation management system includes:
a plan determination device that makes a determination of a cultivation plan of a plant or helps the determination, based on a producer's management policy and a plant growth simulation;
an environment/work controller that controls an ambient environment for cultivating the plant and that gives a work instruction to a worker who performs work related to the cultivation of the plant or helps the work instruction; and
a management execution device that controls a relationship between a planned index value related to the cultivation plan determined by the plan determination device and an actual index value related to the cultivation of the plant obtained by the environment/work controller.

The management execution device gives at least one of index value information and work information to the plan determination device, the index value information being information about an achievement or prediction of the actual index value, the work information being information about a content of the work.

The management execution device obtains planned index value information from the plan determination device, the planned index value information being information about a plan of the index value.

The management execution device gives work change information and environmental policy information to the environment/work controller, the work change information being information about a change in the content of the work, the environmental policy information being a policy of controlling the ambient environment of the plant.

The management execution device obtains work record information, index value record information, and environment/biological body record information from the environment/work controller, the work record information being information about the content of the work actually performed, the index value record information being record information about the index value of the plant, the environment/biological body record information being record information about the ambient environment of the plant and/or biological body.

Herein, the plan determination device determines a cultivation plan of a plant, based on a producer's management policy and a plant growth simulation. More specifically, the producer's management policy may be annual sales, gross profit, or business profit obtained, for example, by cultivating, harvesting, and selling a target plant (e.g., vegetable, fruit, and fruit vegetable). The plant growth simulation is a predictive result obtained under the condition that the environment/work controller (described later) controls an ambient environment of a plant and work related to the cultivation of the plant in a farm having a predetermined planting area (herein, the predictive result is the result of predicting a yield, a quality, or a price, for example). The plan determination device accurately determines a cultivation plan required to accomplish the management policy from the above information. The plan determination device may automatically calculate the cultivation plan or help a user create the cultivation plan. For example, the plan determination device may make partial automatic calculation.

The environment/work controller is a device that controls an ambient environment for cultivating a plant and gives a work instruction to a worker who performs work related to the cultivation of the plant or helps the work instruction. The environment/work controller automatically adjusts the ambient environment of the plant so as to promote the growth of the plant. In addition, the environment/work controller automatically gives the instruction for the content of the work related to the plant cultivation to the worker directly or a manager. An example of the content of the instruction is a textual display of the instruction itself. Moreover, the environment/work controller may help the work instruction by displaying information that helps create the instruction.

The management execution device controls a relationship between a planned index value related to the cultivation plan determined by the plan determination device and an actual index value of the plant obtained by the environment/work controller. For example, each index value may be a yield, a quality (e.g., a sugar content, size, color of berries), or a possible shipment date and time.

More specifically, the management execution device gives index value information and work information to the plan determination device; the index value information being information about an achievement or prediction of an index value of the plant, and the work information being information about a content of the work. Furthermore, the management execution device obtains planned index value information from the plan determination device; the planned index value information being information about a plan of the index value of the plant.

The management execution device gives work change information and environmental policy information to the environment/work controller; the work change information being information about a change in the content of the work, and the environmental policy information being information about a policy of controlling the ambient environment of the plant. Furthermore, the management execution device obtains work record information, yield record information, and environment/biological body record information from the environment/work controller; the work record information being information about a content of work actually performed, the yield record information being information about a yield of the plant, and the environment/biological body record information being record information about an ambient environment of the plant and/or a biological body. (In this case, the management execution device is also supposed to obtain record information about the biological body with another method, such as obtaining the record information about the biological body from the environment/work controller, through a direct input of a person, or from a sensor outside the cultivation management system according to the present invention.)

With the above configuration, the management execution device changes the cultivation plan, the work devoted to cultivating the plant, or the ambient environment of the plant in such a way that the planned index value related to the cultivation plane determined by the plan determination device coincides with an actual index value of the plant obtained by the environment/work controller. In this way, it is possible to accurately make the index value based on the management plan recognized by a user coincide with the actual index value obtained by the environment/work controller, thereby accomplishing the user's management policy.

In the present invention, the management execution device includes;
a learning machine that learns learning data that contains at least information about a growth situation of a plant to be cultivated, information about an environmental state of the plant, information obtained by quantifying a history of work on the plant, and information about the index value of the plant, that receives at least one of the information about the growth situation of the plant, the information about the environmental state of the plant, and the information obtained by quantifying the history of the work on the plant, and that thereby outputs information about a predicted value of the index value of the plant; and
an instruction generator that uses the learning machine to generate at least one of the work change information and the environmental policy information from information containing at least part of the environment/biological body record information, the quantified work information, the index value record information, and the planned index value information.

The instruction generator may enter information containing at least part of the environment/biological body record information and the quantified work information obtained by quantifying the work record information into the learning machine and may cause the learning machine to output information about a predicted value of the index value of the plant. In addition, the instruction generator may generate the work change information and the environmental policy information in such a way that the predicted value of the index value of the plant approximates to the index value in the planned index value information. With this configuration, the learning machine that has learned, as the learning data, the information obtained from the environment/work controller is used to generate the work change information and the environmental policy information. In this way, it is possible to more accurately make the planned index value obtained by the plan determination device approximate to the actual index value obtained by the environment/work controller. In this case, the information about the growth situation of the plant to be cultivated is, for example, information corresponding to record information about the biological body contained in the environment/biological body record information. The information about the environmental state of the plant is, for example, information corresponding to the record information about the ambient environment of the plant contained in the environment/biological body record information. The information obtained by quantifying the history of work on the plant is information corresponding to the quantified work information. The information about the index value of the plant is information corresponding to the index value record information.

In the present invention, the index value may be a yield of a plant. In which case, it is possible to control the yield, which significantly impacts producer's sales and profit, thereby more reliably accomplishing the user's management policy.

In the present invention, the information about the growth situation of the plant may contain information about tree vigor, which is a value equivalent to a ratio between quantities of leaves and fruits of the plant. When the quantity of leaves is too small relative to that of the berries (fruits or nuts) of the plant, nutrients resulting from photosynthesis for growing the fruits or nuts are low, supposedly hindering the growth of the fruits or nuts. When the quantity of leaves is too large relative to that of the fruits or nuts, the nutrients required to grow the leaves themselves may be distributed, supposedly hindering the growth of the fruits or nuts. Therefore, the tree vigor needs to have an appropriate value in terms of appropriate growth of fruits and nuts. The present invention employs this tree vigor as one of multiple pieces of information about the growth situation of the plant, successfully more accurately making the index value approximate to the planned index value.

In the present invention, the plan determination device may include:
a management policy input unit that receives information about a producer's profit target;
a sales plan calculator that calculates a sales plan of the plant or helps calculate the sales plan, based on the profit target received by the management policy input unit;
a growth simulator that simulates growth of the plant; and
a cultivation plan calculator that calculates the cultivation plan of the plant or helps calculate the cultivation plan, based on the sales plan obtained by the sales plan calculator and a growth simulation result of the growth simulator. This configuration enables the user to automatically or semi-automatically obtain the cultivation plan by entering the information about the profit target based on the management policy into the management policy input unit.

In the present invention, the environment/work controller may include: a work manager that displays a work content for the worker, based on the work change information from the management execution device and that receives inputs of the work record information and the index value record information; and an environment controller that controls the environment regulator that adjusts the ambient environment of the plant, based on the environmental policy information from the management execution device and that obtains the environment/biological body record information from various sensors.

Herein, the environment regulator refers to an apparatus that regulates an ambient environment of a plant. Examples of the environment regulator include a warmer/humidifier, a blackout curtain, a CO2 generator, a fertilizer, an irrigator, and a ventilation window, other apparatuses, and apparatus groups thereof. The various sensors include a temperature/humidity sensor, a solar radiation sensor, a CO2 sensor, a soil nutrient sensor, a soil moisture sensor, an absorbed nutrient sensor, a sap flow sensor, an image sensor, and other sensors, and sensor groups thereof.

With this configuration, the work manager can more reliably transmit the content of the work change information from the management execution device to the worker and can promptly obtain real-time information on a work content and an index value. Furthermore, it is possible to more accurately and promptly control the ambient environment of the plant, based on environmental data or biological data.

The present invention is a plant cultivation management device. This plant cultivation management device may include:
a planned index value information acquisition unit that obtains planned index value information, the planned index value information being information about a plan of a predetermined index value related to a plant;
a work record information acquisition unit that obtains work record information, the work record information being information about a content of work actually performed at a cultivation site of the plant;
an environment/biological body record information acquisition unit that obtains environment/biological body record information, the environment/biological body record information being record information about an ambient environment of the plant and a biological body;
an index value record information acquisition unit that obtains index value record information, the index value record information being record information about the index value of the plant;
a learning machine that learns learning data that contains at least information about a growth situation of a plant to be cultivated, information about an environmental state of the plant, information obtained by quantifying a history of work on the plant, and information about the index value of the plant, that receives at least one of the information about the growth situation of the plant, the information about the environmental state of the plant, and the information obtained by quantifying the history of the work on the plant, and that thereby outputs information about a predicted value of the index value of the plant; and
an instruction generator that uses the learning machine to generate at least one of the work change information and environmental policy information from information containing at least part of the environment/biological body record information, the quantified work information, the index value record information, and the planned index value information.

The instruction generator enters information containing at least part of the environment/biological body record information and the quantified work information into the learning machine and causes the learning machine to output information about a predicted value of the index value of the plant.

The instruction generator generates the work change information and the environmental policy information in such a way that the predicted value of the index value of the plant approximates to the index value in the planned index value information.

It should be noted that the means for solving the above problems can be implemented in combination as much as possible.

### EFFECT OF THE INVENTION

The present invention enables even inexperienced producers to control cultivation in accordance with cultivation plans reflecting their management policies.

### BRIEF DESCRIPTION OF THE DRAWINGS

Fig. 1 is a functional block diagram illustrating a schematic configuration of a cultivation management system according to an embodiment of the present invention.
Fig. 2 is a block diagram illustrating a relationship between a plan determination device and a management execution device according to the embodiment of the present invention.
Fig. 3 is a block diagram illustrating a relationship between the management execution device and an environment/work controller according to the embodiment of the present invention.
Fig. 4 is a diagram illustrating a hardware configuration of the cultivation management system according to the embodiment of the present invention.
Fig. 5 is a diagram illustrating a hardware configuration of a management execution device according to the embodiment of the present invention.
Fig. 6 is a flowchart of a process according to the embodiment of the present invention.

### MODE FOR CARRYING OUT THE INVENTION

### <Application example>

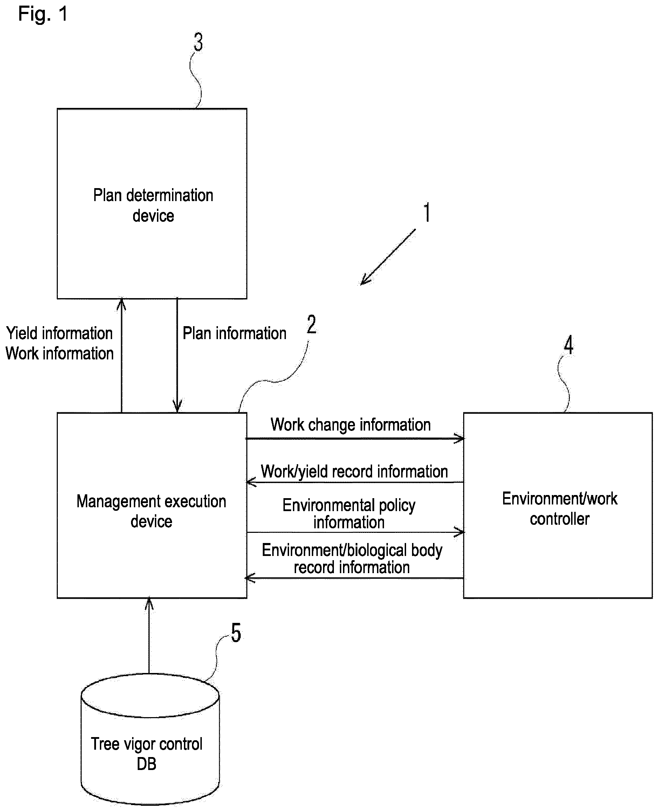

Some application examples of the present invention will be described below. The invention according to this application example is a plant cultivation management system that enables even inexperienced users to control cultivation in accordance with cultivation plans based on their management policies. Users of the present invention may be producers, for example; however, the users are not limited to producers and may be consultants or interested parties, for example. As illustrated in Fig. 1, this system includes a plan determination device 3, an environment/work controller 4, and a management execution device 2. The plan determination device 3 determines a plant cultivation plan based on a user's management policy and a plant growth simulation. The environment/work controller 4 controls an ambient environment during plant cultivation and gives a work instruction to a worker who performs work related to cultivation. The management execution device 2 controls a relationship between a yield related to the cultivation plan determined by the plan determination device 3 and a yield of a plant obtained via the environment/work controller 4. In this application example and the embodiments that will be described later, as an example, an index value in the present invention is set to a yield of a plant.

The management execution device 2 gives yield information and work information to the plan determination device 3; the yield information is information about an achievement or prediction of a yield of a plant, and the work information is information about a content of work. The management execution device 2, in turn, acquires planned information from the plan determination device 3; the planned information is information about a plan about the yield of the plant. Furthermore, the management execution device 2 gives work change information and environmental policy information to the environment/work controller 4; the work change information is information about a change in a work content, and environmental policy information is a policy of controlling an ambient environment of the plant. The management execution device 2, in turn, acquires work record information, yield record information, and environment/biological body record information from the environment/work controller 4; work record information is information about a content of work actually performed, the yield record information is record information about a yield of a plant, and the environment/biological body record information is record information about the ambient environment of the plant and a biological body.

The management execution device 2 adjusts an ambient environment of a plant and a work content in the environment/work controller 4 in such a way that an actual yield obtained via the environment/work controller 4 approximates to a planned yield determined by the plan determination device 3.

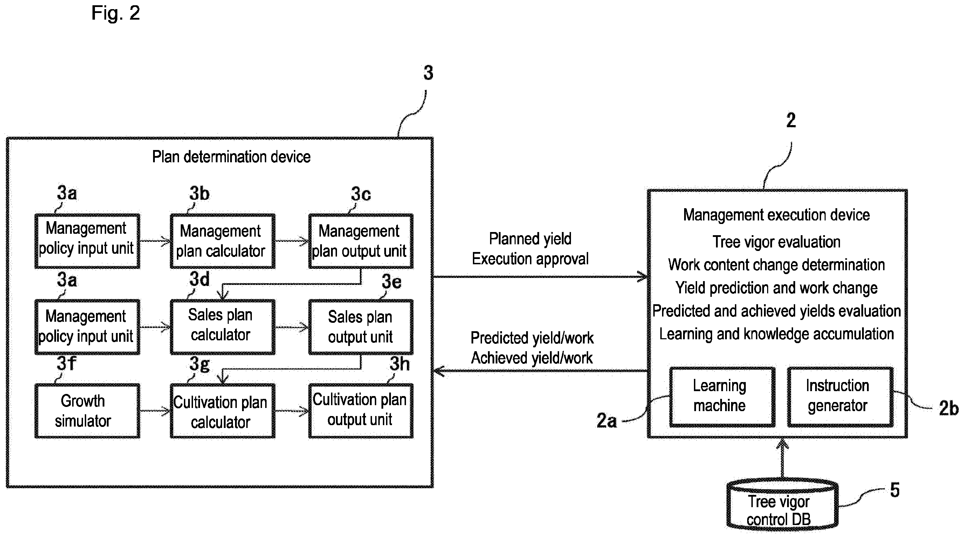

More specifically, as illustrated in Fig. 2, when receiving a management policy from a user, the plan determination device 3 calculates a management plan and a sales plan and further considers a simulation result of a growth simulator 3f, thereby calculating a cultivation plan. Then, the plan determination device 3 calculates a planned yield based on this cultivation plan and gives the planned yield to the management execution device 2. This planned yield corresponds to a planned index value information in the present invention.

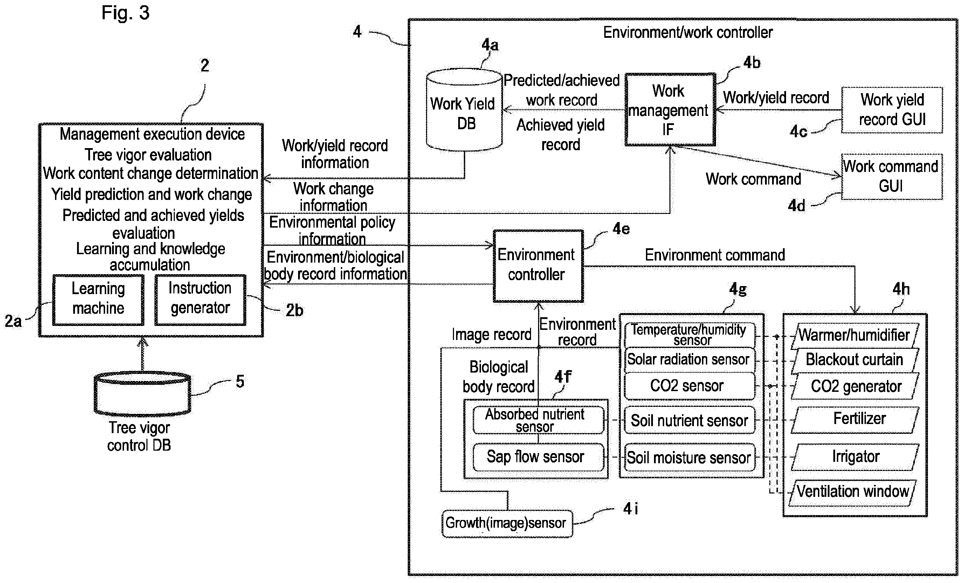

As illustrated in Fig. 3, the environment/work controller 4 includes an environment regulator 4h that gives measurements of an environment sensor group 4g and a biosensor group 4f to the management execution device 2 as the environment/biological body record information. In addition, the environment/work controller 4 also gives record information on worker's work and a yield to the management execution device 2 via a work management interface 4b. In this case, the environment/work controller 4 quantifies the work content and then transmits this work content. Herein, the record information on the worker's work corresponds to work record information in the present invention. Moreover, the record information of the yield corresponds to index value record information.

The management execution device 2 enters the above information into a learned learning machine 2a. Then, an instruction generator 2b gives the work change information for making the actual yield approximate to the planned yield and environmental policy information to the environment/work controller 4.

In the application example described above, the management execution device 2 gives the environmental policy information and the work change information to the environment/work controller 4 in order to accomplish the planned yield that the plan determination device 3 has given to the management execution device 2. However, the index value controlled by a cultivation management system 1 according to the present invention is not limited to the yield. In addition to the yield, for example, the management execution device 2 may accomplish the user's (producer's) management plan by controlling qualities, such as a sugar content, a size, a color, and a harvest time of a fruit.

Some embodiments of the present invention will be described in detail below with reference to the drawings.

### <First embodiment

Fig. 1 is a functional block diagram of the cultivation management system 1 in this embodiment. The cultivation management system 1 in this embodiment includes the plan determination device 3, the environment/work controller 4, and the management execution device 2. The plan determination device 3 determines a yield and a cultivation plan based on a user's management policy. The environment/work controller 4 controls an ambient environment of a plant and gives a work instruction to be added to the plant. The management execution device 2 functions to achieve a yield determined by the plan determination device 3 in cooperation with both the plan determination device 3 and the environment/work controller 4.

As can be seen from Fig. 1, the plan determination device 3 gives, to the management execution device 2, the plan information related to the plan determined by the plan determination device 3 as the planned index value information. The management execution device 2 gives, to the plan determination device 3, the yield information, which is information on an actual yield and corresponds to an index value information, and the work information, which is information on the work being performed at a cultivation site.

The management execution device 2 gives, to the environment/work controller 4, the work change information related to a change in the worker's work and the environmental policy information related to a management policy of the ambient environment of the plant. The environment/work controller 4 gives, to the management execution device 2, the work record information about a content of work actually performed and the work record information, which is record information on the actual yield and corresponds to the index value record information (both of these two pieces of information are expressed comprehensively as the work/yield record information in Fig. 1). In addition, the environment/work controller 4 gives, to the management execution device 2, the environment/biological body record information, which is record information on an ambient environment of a plant and a biological state.

The management execution device 2 predicts a yield in the environment/work controller 4 and gives the work change information and the environmental policy information based on the yield prediction. In this case, the yield prediction uses plant vigor as a determination criterion. For this reason, the management execution device 2 is connected to a tree vigor management DB 5 and uses tree vigor images for the yield prediction. The tree vigor management DB 5 collects the tree vigor images of the plant to be managed from a growth (image) sensor 4i (described later) installed at the plant cultivation site.

Fig. 2 is a block diagram illustrating more detailed functional configurations of the management execution device 2 and the plan determination device 3. As illustrated in Fig. 2, the plan information that the plan determination device 3 gives to the management execution device 2 contains not only a planned yield but also information related to execution approval of a control process in the management execution device 2. When deriving a process of making an actual yield of a plant approximate to a planned yield, the management execution device 2 may be determined to review the planned yield itself. Regarding information related to the above execution approval, in such cases, the plan determination device 3 gives information related to the approval of a plan change to the management execution device 2. In addition, the yield information that the management execution device 2 gives to the plan determination device 3 contains information related to the predicted and achieved yields. The work information that the management execution device 2 gives to the plan determination device 3 contains information related to the prediction work and the achieved work.

The management execution device 2 has some functions, such as those of evaluating tree vigor, determining whether to change a work content, predicting a yield, changing work, and evaluating predicted and achieved yields, all of which are realized by learning and knowledge accumulation. More specifically, the management execution device 2 is provided with the learning machine 2a and the instruction generator 2b. The learning machine 2a and the instruction generator 2b will be described later.

The plan determination device 3 includes a management policy input unit 3a that receives an input of the user's management policy. Examples of a content of the management policy include sales, gross profit, and operating profit for every quarter of a budget year. Based on the management policy received via the management policy input unit 3a, a management plan calculator 3b calculates a management plan. Based on the content of the input via the management policy input unit 3a, the management plan calculator 3b calculates the management plan as more detailed control information by using the information on, for example, an expected cost of sales and the expected selling, general and administrative expenses for each period.

In this embodiment, the user may calculate the management plan itself, in which the plan determination device 3 may only give information that helps the user perform the calculation. After the management plan calculator 3b has calculated the management plan, the management plan output unit 3c outputs the management plan. Based on the management policy received via the management policy input unit 3a and the management plan output from the management plan output unit 3c, a sales plan calculator 3d for a plant calculates a sales plan of the plant. In this case, the sales plan calculator 3d calculates the sales plan of the plant in consideration of information such as that on seasonal selling prices of the plant to be managed. After the sales plan calculator 3d has calculated the sales plan, a sales plan output unit 3e outputs the sales plan.

A growth simulator 3f simulates a cultivation amount in consideration of a capital investment based on the management plan, the number of workers, the seasonal fluctuation of the yield, and other factors. A cultivation plan calculator 3g calculates a cultivation plan, based on the simulation result of the growth simulator 3f and the sales plan output from the sales plan output unit 3e. After the cultivation plan calculator 3g has calculated the cultivation plan, a cultivation plan output unit 3h outputs the cultivation plan.

Fig. 3 illustrates a relationship between the management execution device 2 and the environment/work controller 4. The environment/work controller 4 is a device that controls an ambient environment of a plant and work devoted to the plant, mainly at a site where the plant is cultivated. The management execution device 2 gives, to the environment/work controller 4, the work change information, which is information on an instruction of changing a content of worker's work. This work change information is transmitted to the work management interface 4b provided inside the environment/work controller 4. The work management interface 4b transmits information related to a work command to a work command GUI 4d. Through the work command GUI 4d, a worker or a manager knows a content of work to be performed or a changed content of the work.

A work yield record GUI 4c receives a work record and a yield record from the worker or the manager and transmits the work record and the yield record to the work management interface 4b. Then, the work management interface 4b transmits a work plan/achievement record and a yield achievement record to a work yield DB 4a, which then stores the predicted/achieved work record and the yield achievement record as information. The predicted/achieved work record is information that combines information about a content of a work instruction with information about a content of a work record (work achievement), and the yield achievement record is information about a content of a yield record. The work yield DB 4a transmits, to the management execution device 2, the work/yield record information, which is information that combines the work record with the yield record.

The management execution device 2 transmits, to an environment controller 4e in the environment/work controller 4, the environmental policy information, which is a policy of controlling an environment. Then, the environment controller 4e transmits an environment command to the environment regulator 4h. The environment regulator 4h includes: a warmer/humidifier that adjusts ambient temperature and humidity of a plant; a blackout curtain that adjusts the amount of sunshine; a CO2 generator that adjusts the amount of CO2; a fertilizing machine that adjusts the amount of fertilizer; an irrigator that irrigates the plant or soil; and a ventilation window through which ambient air of the plant is made flesh. The environment regulator 4h adjusts an environment that affects growth of a plant.

The environment/work controller 4 is provided with the environment sensor group 4g, the biosensor group 4f, and the growth (image) sensor 4i. The environment sensor group 4g includes: a temperature/humidity sensor that measures ambient temperature and humidity of a plant; a solar radiation sensor that measures the amount of sunshine; a CO2 sensor that measures the amount of CO2; a soil nutrient sensor that measures a predetermined component in a soil; and a soil moisture sensor that measures the amount of moisture in the soil. The biosensor group 4f includes an absorbed nutrient sensor that measures the amount of nutrient absorbed in a plant and a sap flow sensor that measures the flow rate of sap in the plant.

The environment sensor group 4g transmits an environmental record to the environment controller 4e; the environmental record is information on an ambient environment of a plant. The biosensor group 4f and the growth (image) sensor 4i transmit biological body records to the environment controller 4e; the biological body records are biological information. The environment controller 4e transmits the environment/biological body record information to the management execution device 2; the environment/biological body record information is information that combines the environmental record with the biological body record.

As described above, the management execution device 2 is provided with the learning machine 2a and the instruction generator 2b. The learning machine 2a is a learning machine that learns learning data containing at least information on a growth situation of a plant to be cultivated, information on an environmental state of the plant, information obtained by quantifying a history of work on a plant, and information on a yield of the plant. The learning machine 2a receives at least one of information on the growth situation of the plant, the information on the environmental state of the plant, and the information obtained by quantifying the history of the work on the plant and outputs information about a predicted yield of the plant. The instruction generator 2b receives at least one of the environment/biological body record information, the work record information, the work/yield record information from the environment/work controller 4 and also receives information containing at least part of information on the planned yield from the plan determination device 3. Then, the instruction generator 2b predicts a yield by using the learning machine 2a and generates at least one of the work change information and the environmental policy information in such a way that the planned yield and the predicted yield approximate to each other.

Actually, the learning machine 2a receives quantified work information obtained by quantifying the work record information. The quantified work information obtained by quantifying the work record information is generated, for example, by a user selecting the kind of work through a pull-down menu displayed on a display upon entry of a work record, selecting the amount of work from a work amount pull-down menu displayed in accordance with the selected work kind, and entering a work history. In this case, the user activates a flag corresponding to the selected work kind (e.g., a flower picking flag if the work is flower picking) and sets the quantified work information to a numerical value (e.g., 3) quantified based on a unit (a number in this case) determined in accordance with the work kind. The method for quantifying the work history is not limited to this method, and any other method may be employed as appropriate.

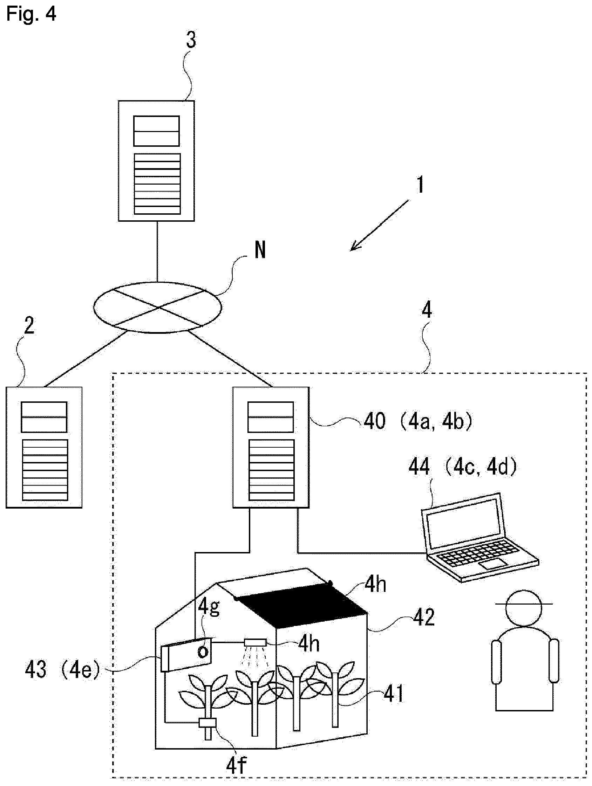

Fig. 4 is a schematic diagram illustrating a schematic hardware configuration of the cultivation management system 1 according to this embodiment. The management execution device 2, the plan determination device 3, and the environment/work controller 4 are connected together via a network N, for example. The environment/work controller 4 is provided with a server device 40. The server device 40 has functions of the work yield DB 4a and the work management interface 4b inside. Furthermore, the server device 40 is connected to the environment controller 4e, which acts as a controller 43 disposed in a house 42 in which a plant 41 is cultivated.

The environment controller 4e is connected to both the environment sensor group 4g and the biosensor group 4f. The environment controller 4e can measure a temperature, a humidity, sunshine, a CO2 concentration, a soil nutrient content, a soil water content, and other factors inside the house 42 and can transmit the measurements to the management execution device 2 as the environment/biological body record information. Furthermore, the growth (image) sensor 4i (not illustrated) can transmit an image of the plant 41 to the management execution device 2 as the environment/biological body record information. In addition, the environment controller 4e is connected to the environment regulator 4h and thus can control the temperature, the humidity, the sunshine, the CO2 concentration, the fertilizer amount, and the water amount inside the house 42. The server device 40 is connected to a terminal 44. The terminal 44 is provided with the functions of the work yield record GUI 4c and the work command GUI 4d, which enables the worker or manager to enter information on work and a yield and to confirm a content of a work instruction.

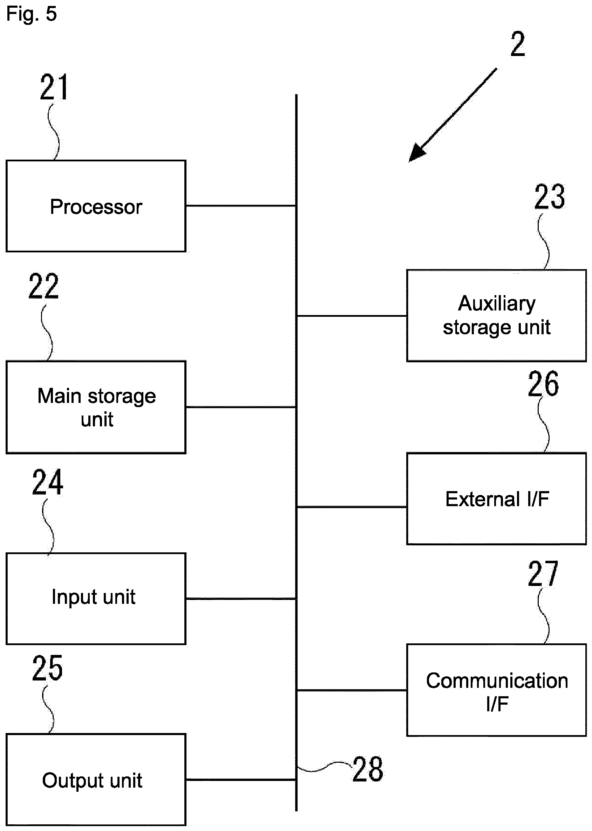

Fig. 5 is a hardware configuration diagram of the management execution device 2 according to this embodiment. In this embodiment, the management execution device 2 corresponds to a plant cultivation management device. The management execution device 2 is a computer device that includes a processor 21, a main storage unit 22, an auxiliary storage unit 23, an input unit 24, an output unit 25, an external interface 26, a communication interface 27, and a bus 28.

The processor 21 may be a CPU or a DSP. The main storage unit 22 includes ROM (read only memory) and RAM (random access memory). The auxiliary storage unit 23 includes an erasable programmable ROM (EPROM), a hard disk drive (HDD), and a removable medium. For example, the removable medium may be a flash memory, such as a USB memory or an SD card, or a disc recording medium, such as a CD-ROM, a DVD disc, or a Blu-ray disc. The auxiliary storage unit 23 stores an operating system (OS), various programs, various tables, and other data. The auxiliary storage unit 23 loads a program stored therein into a work area of the main storage unit 22. Then, the processor 21 executes this program, which controls individual components, realizing functions.

However, some or all of the functional units may be implemented in a hardware circuit, such as an application specific integrated circuit (ASIC) and a field programmable gate array (FPGA). However, the management execution device 2 does not necessarily have to be implemented by a single physical configuration. Alternatively, the management execution device 2 may be implemented by a plurality of computers that cooperate with each other.

The input unit 24, which includes a keyboard, a mouse, and a microphone, receives input operations from the user. The output unit 25, which includes a display and a speaker, gives information to the user. The external interface (denoted as I/F in the figure) 26 is an interface via which the management execution device 2 is to be connected to various external devices. The communication interface 27 is an interface via which the management execution device 2 is to be connected to the network. The communication interface 27 can employ an appropriate configuration, depending on the connection scheme for the network. In this embodiment, the communication interface 27 includes a planned index value information acquisition unit, a work record information acquisition unit, an environment/biological body record information acquisition unit, and an index value record information acquisition unit. The bus 28 is a signal transmission line via which components in the management execution device 2 are to be connected. It should be noted that each of hardware configurations of the plan determination device 3 and the server device 40 in the environment/work controller 4 is substantially the same as that of the management execution device 2; therefore, a description thereof will not be described.

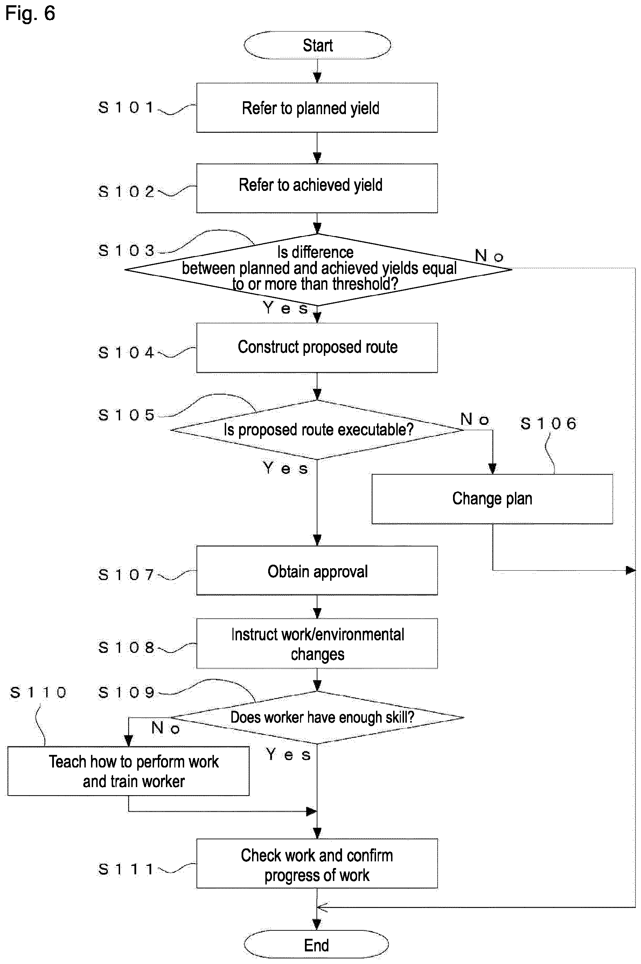

Next, Fig. 6 illustrates a flowchart of a process in the cultivation management system 1. The processor 21 in the management execution device 2 executes this flow, based on a program stored in the auxiliary storage unit 23 of the management execution device 2 while communicating as appropriate with both the plan determination device 3 and the environment/work controller 4. When executing the flow, in Step S101, the processor 21 first refers to a current planned yield. This planned yield is information given by the plan determination device 3 and is a planned yield value stored in the auxiliary storage unit 23 inside the management execution device 2. After having completed the process in Step S101, the processor 21 proceeds with Step S102.

In Step S102, the processor 21 refers to an achieved yield. This achieved yield is the yield record information transmitted from the work yield DB 4a in the environment/work controller 4 and also stored in the auxiliary storage unit 23 of the management execution device 2. After having completed the process in Step S102, the processor 21 proceeds with Step S103.

In Step S103, the processor 21 compares values of the planned yield referenced in Step S101 and the achieved yield referenced in Step S102. Then, the processor 21 determines whether a difference between the values of the planned yield and the achieved yield is equal to or greater than a predetermined threshold. When the difference between the values of the planned yield and the achieved yield is equal to or greater than the threshold, the processor 21 determines that it is necessary to take any measures in order to achieve the planned yield and thus proceeds with Step S104. When the difference between the values of the planned yield and the achieved yield is less than the threshold, the processor 21 determines that the plan is being successfully executed and thus temporarily terminates this routine.

If the difference between the values of the planned yield and the achieved yield is greater than or equal to the threshold, the processor 21 attempts to construct a proposed route in Step S104. More specifically, the instruction generator 2b in the management execution device 2 enters the environment/biological body record information and the quantified work information into the learned learning machine 2a, which then outputs information of a predicted yield. The processor 21 searches for values of the environment/biological body record information and the quantified work information which decreases the difference between the predicted yield and the planned yield to less than the threshold. Then, the processor 21 stores, as the proposed route, the resultant values of the environment/biological body record information and the quantified work information (or the values of the work change information and the environmental policy information which change the environment/biological body record information and the quantified work information change in the intended manner) in the auxiliary storage unit 23 of the management execution device 2. After having completed the process in Step S104, the processor 21 proceeds with Step S105.

In Step S105, the processor 21 determines whether the proposed route constructed in Step S104 is executable. More specifically, the processor 21 determines whether the proposed route is executable from the viewpoints of the man-hours, people, schedule, materials, and machines. When determining that the proposed route is executable in Step S105, the processor 21 proceeds with Step S107. In Step S107, the management execution device 2 gives, to the plan determination device 3, predicted yield and work involved in the proposed route. Then, the plan determination device 3 stores values of the predicted yield and work given by the management execution device 2 in the auxiliary storage unit (not illustrated) and then gives execution approval information to the management execution device 2. After having completed the process in Step S107, the processor 21 proceeds with Step S108.

When determining that the proposed route is unexecutable in Step S105, the processor 21 proceeds with Step S106. In Step S106, the management execution device 2 requests the plan determination device 3 to change the cultivation plan. In addition, the management execution device 2 gives, to the plan determination device 3, the predicted yield and the predicted work amount involved in the execution of the proposed route. Then, the plan determination device 3 stores the values of the predicted yield and the predicted work given by the management execution device 2 in the auxiliary storage unit (not illustrated) and changes the cultivation plan. In addition, the plan determination device 3 changes the sales plan, the management plan, and the management policy as necessary. After having completed the process in Step S106, the processor 21 temporarily terminates this routine.

In Step S108, the management execution device 2 gives the work change information and the environmental policy information to the environment/work controller 4, based on the approval obtained from the plan determination device 3 in Step S107. After having completed the process in Step S108, the processor 21 proceeds with Step S109.

In Step S109, the environment/work controller 4 determines whether a worker has an enough skill to execute the proposed route. In this case, the environment/work controller 4 stores information on a skill that a worker requires to perform each work content and information on a skill possessed by the worker in the auxiliary storage unit (not illustrated) in the server device 40. The environment/work controller 4 makes the determination by comparing the required skills with the possessed skills for each work content. When determining that the worker has an enough skill in Step S109, the environment/work controller 4 proceeds with Step S111. When determining that the worker lacks an enough skill in Step S109, the environment/work controller 4 proceeds with Step S110.

In Step S110, the environment/work controller 4 displays a message on the terminal 44 (work command GUI 4d) which teaches the worker how to perform the work and trains the worker. In accordance with the displayed message, the manager explains the worker the work method and trains the worker. After having completed the process in Step S110, the processor 21 proceeds with Step S111. In Step S111, the environment/work controller 4 displays a message on the terminal 44 (work command GUI 4d) which prompts the manager to check the work and confirm the progress of the work. Then, the manager checks the work and confirms its progress in accordance with the displayed message. After having completed the process in Step S111, the processor 21 temporarily terminates this routine.

In addition, to enable a comparison between constituent requirements in the present invention and the configurations in the embodiment, the constituent requirements in the present invention are described below together with reference numerals in the drawings.

### <Invention 1>

A plant cultivation management system (1) including:
a plan determination device (3) that makes a determination of a cultivation plan of a plant or helps the determination, based on a producer's management policy and a plant growth simulation;
an environment/work controller (4) that controls an ambient environment for cultivating the plant and that gives a work instruction to a worker who performs work related to the cultivation of the plant or helps the work instruction; and
a management execution device (2) that controls a relationship between a planned index value related to the cultivation plan determined by the plan determination device (3) and an actual index value related to the cultivation of the plant obtained by the environment/work controller, in which
the management execution device (2) gives at least one of index value information and work information to the plan determination device (3), the index value information being information about an achievement or prediction of the actual index value, the work information being information about a content of the work,
the management execution device (2) obtains planned index value information from the plan determination device (3), the planned index value information being information about a plan of the index value,
the management execution device (2) gives work change information and environmental policy information to the environment/work controller (4), the work change information being information about a change in the content of the work, the environmental policy information being a policy of controlling the ambient environment of the plant, and
the management execution device (2) obtains work record information, index value record information, and environment/biological body record information from the environment/work controller (4), the work record information being information about the content of the work actually performed, the index value record information being record information about the index value of the plant, the environment/biological body record information being record information about the ambient environment of the plant and/or biological body.

### <Invention 8>

A plant cultivation management device (2) including:
a planned index value information acquisition unit (27) that obtains planned index value information, the planned index value information being information about a plan of a predetermined index value related to a plant;
a work record information acquisition unit (27) that obtains work record information, the work record information being information about a content of work actually performed at a cultivation site of the plant;
an environment/biological body record information acquisition unit (27) that obtains environment/biological body record information, the environment/biological body record information being record information about an ambient environment of the plant and a biological body;
an index value record information acquisition unit (27) that obtains index value record information, the index value record information being record information about the index value of the plant;
a learning machine (2a) that learns learning data that contains at least information about a growth situation of a plant to be cultivated, information about an environmental state of the plant, information obtained by quantifying a history of work on the plant, and information about the index value of the plant, that receives at least one of the information about the growth situation of the plant, the information about the environmental state of the plant, and the information obtained by quantifying the history of the work on the plant, and that thereby outputs information about a predicted value of the index value of the plant; and
an instruction generator (2b) that uses the learning machine (2a) to generate at least one of the work change information and environmental policy information from information containing at least part of the environment/biological body record information, the quantified work information, the index value record information, and the planned index value information, in which
the instruction generator (2b) enters information containing at least part of the environment/biological body record information and the quantified work information into the learning machine (2a) and causes the learning machine (2a) to output information about a predicted value of the index value of the plant, and
the instruction generator (2b) generates the work change information and the environmental policy information in such a way that the predicted value of the index value of the plant approximates to the index value in the planned index value information.

### DESCRIPTION OF SYMBOLS

- 1: cultivation management system
- 2: management execution device
- 3: plan determination device
- 4: environment/work controller
- 5: tree vigor management DB

## Claims

1. A plant cultivation management system comprising:
a plan determination device configured to make a determination of a cultivation plan of a plant or helps the determination, based on a producer's management policy and a plant growth simulation;
an environment/work controller configured to control an ambient environment for cultivating the plant and that gives a work instruction to a worker who performs work related to the cultivation of the plant or helps the work instruction; and
a management execution device configured to control a relationship between a planned index value related to the cultivation plan determined by the plan determination device and an actual index value related to the cultivation of the plant obtained by the environment/work controller, wherein
the management execution device gives at least one of index value information and work information to the plan determination device, the index value information being information about an achievement or prediction of the actual index value, the work information being information about a content of the work,
the management execution device obtains planned index value information from the plan determination device, the planned index value information being information about a plan of the index value,
the management execution device gives work change information and environmental policy information to the environment/work controller, the work change information being information about a change in the content of the work, the environmental policy information being a policy of controlling the ambient environment of the plant, and
the management execution device obtains work record information, index value record information, and environment/biological body record information from the environment/work controller, the work record information being information about the content of the work actually performed, the index value record information being record information about the index value of the plant, the environment/biological body record information being record information about the ambient environment of the plant and/or biological body.

2. The plant cultivation management system according to claim 1, wherein
the management execution device includes;
a learning machine that learns learning data that contains at least information about a growth situation of a plant to be cultivated, information about an environmental state of the plant, information obtained by quantifying a history of work on the plant, and information about the index value of the plant, that receives at least one of the information about the growth situation of the plant, the information about the environmental state of the plant, and the information obtained by quantifying the history of the work on the plant, and that thereby outputs information about a predicted value of the index value of the plant; and
an instruction generator that uses the learning machine to generate at least one of the work change information and the environmental policy information from information containing at least part of the environment/biological body record information, the quantified work information obtained by quantifying the work record information, the index value record information, and the planned index value information.

3. The plant cultivation management system according to claim 2, wherein
the instruction generator enters information containing at least part of the environment/biological body record information and the quantified work information into the learning machine and causes the learning machine to output information about a predicted value of the index value of the plant, and
the instruction generator generates the work change information and the environmental policy information in such a way that the predicted value of the index value of the plant approximates to the index value in the planned index value information.

4. The plant cultivation management system according to any one of claims 1 to 3, wherein the index value is a yield.

5. The plant cultivation management system according to any one of claims 2 to 4, wherein the information about the growth situation of the plant contains information about tree vigor, the tree vigor being a value equivalent to a ratio between quantities of a leaf and fruit of the plant.

6. The plant cultivation management system according to any one of claims 1 to 5, wherein the plan determination device includes:
a management policy input unit that receives information about a producer's profit target;
a sales plan calculator that calculates a sales plan of the plant or helps calculate the sales plan, based on the profit target received by the management policy input unit;
a growth simulator that simulates growth of the plant; and
a cultivation plan calculator that calculates the cultivation plan of the plant or helps calculate the cultivation plan, based on the sales plan obtained by the sales plan calculator and a growth simulation result of the growth simulator.

7. The plant cultivation management system according to any one of claims 1 to 6, wherein the environment/work controller includes:
a work manager that displays a work content for the worker, based on the work change information from the management execution device and that receives inputs of the work record information and the index value record information; and
an environment controller that controls the environment regulator that adjusts the ambient environment of the plant, based on the environmental policy information from the management execution device and that obtains the environment/biological body record information from various sensors.

8. A plant cultivation management device comprising:
a planned index value information acquisition unit that obtains planned index value information, the planned index value information being information about a plan of a predetermined index value related to a plant;
a work record information acquisition unit that obtains work record information, the work record information being information about a content of work actually performed at a cultivation site of the plant;
an environment/biological body record information acquisition unit that obtains environment/biological body record information, the environment/biological body record information being record information about an ambient environment of the plant and a biological body;
an index value record information acquisition unit that obtains index value record information, the index value record information being record information about the index value of the plant;
a learning machine that learns learning data that contains at least information about a growth situation of a plant to be cultivated, information about an environmental state of the plant, information obtained by quantifying a history of work on the plant, and information about the index value of the plant, that receives at least one of the information about the growth situation of the plant, the information about the environmental state of the plant, and the information obtained by quantifying the history of the work on the plant, and that thereby outputs information about a predicted value of the index value of the plant; and
an instruction generator that uses the learning machine to generate at least one of the work change information and environmental policy information from information containing at least part of the environment/biological body record information, the quantified work information, the index value record information, and the planned index value information, wherein
the instruction generator enters information containing at least part of the environment/biological body record information and the quantified work information into the learning machine and causes the learning machine to output information about a predicted value of the index value of the plant, and
the instruction generator generates the work change information and the environmental policy information in such a way that the predicted value of the index value of the plant approximates to the index value in the planned index value information.
